# FASCICULE DE BREVET EUROPEEN

(11) **EP 3 867 499 B1**
(45) Date de publication et mention de la délivrance du brevet: **02.08.2023**
(21) Numéro de dépôt: 19835704.8
(22) Date de dépôt: 29.11.2019
(51) Int. Cl.: F01D 5/18, B22C 9/10

(54) **AUBE DE TURBOMACHINE À REFROIDISSEMENT AMÉLIORÉ ET NOYAU CÉRAMIQUE POUR LA FABRICATION D'UNE TELLE AUBE**
TURBOMASCHINENLAUFSCHAUFEL MIT VERBESSERTER KÜHLUNG UND KERAMIKKERN FÜR DIE HERSTELLUNG EINER SOLCHEN
TURBOMACHINE BLADE WITH IMPROVED COOLING AND CERAMIC CORE FOR MAKING THE SAME

(30) Priorité: 12.12.2018 FR 1872794
(43) Date de publication de la demande: 25.08.2021
(73) Titulaire: SAFRAN, 75015 Paris (FR); SAFRAN AIRCRAFT ENGINES, 75015 Paris (FR)
(72) Inventeur: OSTINO, Léandre, 77550 MOISSY-CRAMAYEL (FR); AUZILLON, Pierre, Guillaume, 77550 MOISSY-CRAMAYEL (FR); CARIOU, Romain, Pierre, 77550 MOISSY-CRAMAYEL (FR); DE ROCQUIGNY, Thomas, Olivier, Michel, Pierre, 77550 MOISSY-CRAMAYEL (FR); ENEAU, Patrice, 77550 MOISSY-CRAMAYEL (FR); ROLLINGER, Adrien, Bernard, Vincent, 77550 MOISSY-CRAMAYEL (FR); SIMON, Vianney, 77550 MOISSY-CRAMAYEL (FR); SLUSARZ, Michel, 77550 MOISSY-CRAMAYEL (FR); TANG, Ba-Phuc, 77550 MOISSY-CRAMAYEL (FR)
(74) Mandataire: Brevalex
(86) Numéro de dépôt international: PCT/FR2019/052844
(87) Numéro de publication internationale: WO 2020/120862

(56) Documents cités:
- EP-A1- 1 444 418
- EP-A2- 1 065 343
- FR-A1- 3 057 906

## Description

### DOMAINE TECHNIQUE

L'invention concerne une aube de moteur d'aéronef de type turbomachine, tel que par exemple un turboréacteur ou un turbopropulseur, et elle s'applique notamment à une aube de type haute pression.

### ÉTAT DE LA TECHNIQUE ANTÉRIEURE

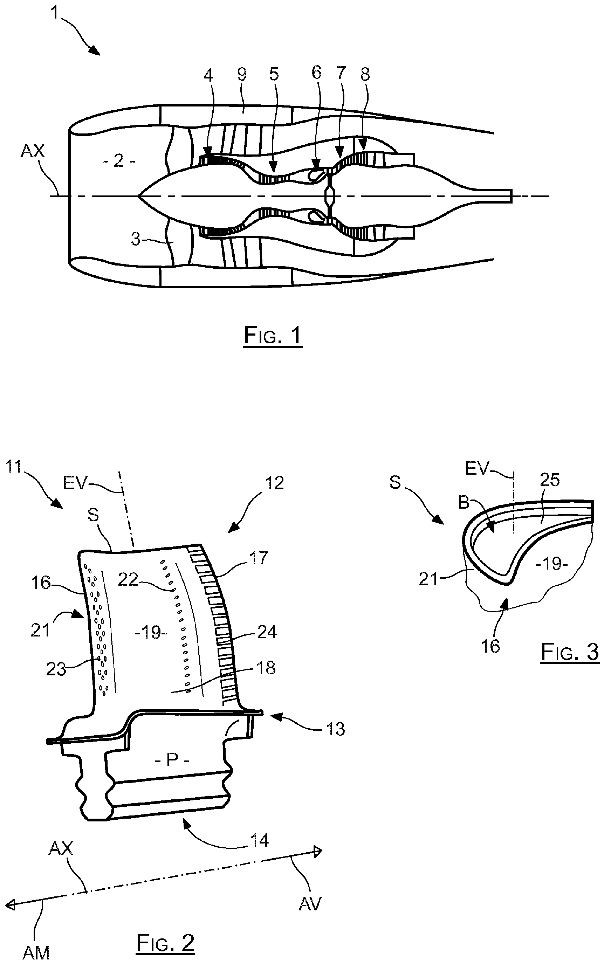

Dans un tel moteur de type turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est compressé par des compresseurs basse pression 4 et haute pression 5 avant d'atteindre une chambre de combustion 6, après quoi il se détend en traversant une turbine haute pression 7 et une turbine basse pression 8, avant d'être évacué en générant une poussée auxiliaire. Le flux secondaire est quant à lui propulsé directement par la soufflante pour générer une poussée principale.

Chaque turbine 7, 8 comporte des séries d'aubes orientées radialement et régulièrement espacées autour d'un axe de rotation AX, un carter externe 9 entourant l'ensemble du moteur.

Le refroidissement des aubes de turbines est assuré en faisant circuler dans chaque aube de l'air prélevé en amont de la chambre de combustion et admis en pied d'aube, cet air étant évacué par des perçages et/ou des fentes traversant les parois de ces aubes.

D'une manière générale, l'efficacité du refroidissement, et en particulier la diminution du débit nécessaire au refroidissement des aubes de turbines haute pression permet de réduire la consommation en carburant d'un turboréacteur, et d'augmenter la durée de vie des aubes. A ce titre différents agencements d'aubes ont été proposés, comme notamment dans le document de brevet FR3021697.

Une autre aube de turbine est connue du document de brevet FR 3 057 906 A. Le document divulgue une aube de turbine comprenant une pale creuse s'étendant à partir d'un pied à un sommet formant une baignoire. La pale creuse comprend un circuit médian de type trombone incluant trois conduits radiaux, raccordés par deux coudes. De plus, la pale contient une cavité sous baignoire. Cette cavité sous baignoire est alimenté par un conduit radial central qui s'étend au centre de la pale et qui est thermiquement protégé par une cavité latérale aval formant un écran thermique le long de la paroi intrados pour ledit conduit central radial.

Une autre telle aube est connue du document EP 1 065 343 A2.

Néanmoins, il apparaît que le refroidissement des aubes de turbine haute pression nécessite un constant effort d'amélioration du fait notamment de l'évolution continuelle des conditions de fonctionnement, des procédés de fabrication et des besoins en performances.

Dans ce contexte, le but de l'invention est d'apporter une nouvelle conception d'aube ayant un circuit de refroidissement amélioré.

### EXPOSÉ DE L'INVENTION

A cet effet, l'invention a pour objet une de turbine d'une turbomachine telle qu'un turboréacteur selon la revendication indépendante 1.

Grâce à l'alimentation de la cavité sous baignoire par un conduit central situé entre les conduits du circuit de type serpentin, l'air acheminé vers la cavité sous baignoire se réchauffe peu, ce qui permet de refroidir efficacement la paroi d'intrados proche du sommet et du bord de fuite.

L'invention concerne également une aube ainsi définie, dans laquelle une extrémité du troisième conduit et au moins une partie du premier coude sont situés entre la cavité sous baignoire et la paroi d'extrados.

L'invention concerne également une aube ainsi définie, dans laquelle le conduit central et la cavité sous baignoire forment un conduit en L situé du côté de la paroi d'intrados.

L'invention concerne également une aube ainsi définie, dans laquelle le conduit central s'étend entre au moins deux conduits du circuit médian qui s'étendent l'un et l'autre sur la majorité de leurs longueurs respectives depuis la paroi d'extrados jusqu'à la paroi d'intrados.

L'invention concerne également une aube ainsi définie, dans laquelle le premier conduit radial et le troisième conduit radial s'étendent l'un et l'autre sur la majorité de leurs longueurs depuis la paroi d'intrados jusqu'à la paroi d'extrados, et dans lequel le conduit central s'étend d'une part entre le premier conduit et le troisième conduit, et d'autre part entre le deuxième conduit et la paroi d'intrados.

L'invention concerne également une aube ainsi définie, dans laquelle la paroi d'intrados comporte des trous de refroidissement qui la traversent et débouchent dans le troisième conduit pour former un film de refroidissement de la paroi d'intrados en amont du bord de fuite.

L'invention concerne également une aube ainsi définie, dans laquelle la paroi d'intrados est dépourvue de trous débouchant dans le premier conduit ou dans le deuxième conduit.

L'invention concerne également une aube ainsi définie, comportant des fentes de refroidissement traversant la paroi d'intrados le long du bord de fuite pour la refroidir, et dans laquelle au moins une de ces fentes est située du côté du sommet et est alimentée en air de refroidissement par la cavité sous baignoire.

L'invention concerne également une aube ainsi définie, comprenant un circuit aval additionnel comportant un conduit aval radial collectant de l'air au niveau du pied pour alimenter plusieurs fentes de refroidissement du bord de fuite.

L'invention concerne également une aube ainsi définie, dans laquelle le conduit aval alimente les fentes par l'intermédiaire d'une rampe aval avec laquelle il communique par des canaux axiaux.

L'invention concerne également une aube ainsi définie, comprenant au moins un conduit amont radial dédié au refroidissement du bord d'attaque, ce conduit amont collectant de l'air de refroidissement au niveau du pied pour refroidir le bord d'attaque en évacuant cet air par des trous traversant la paroi de la pale au niveau du bord d'attaque.

L'invention concerne également une turbomachine comprenant une aube ainsi définie.

L'invention concerne également une turbine comprenant une aube ainsi définie.

L'invention concerne également un noyau en céramique pour la fabrication d'une aube de turbine d'une turbomachine telle qu'un turboréacteur selon la revendication indépendante 14.

### BRÈVE DESCRIPTION DES DESSINS

[Fig. 1] est une vue en coupe d'un turboréacteur connu ;
[Fig. 2] est une vue externe en perspective d'une aube selon l'invention ;
[Fig. 3] est une vue en perspective du sommet de l'aube selon l'invention ;
[Fig. 4] est une vue du circuit de refroidissement amont de l'aube selon l'invention représenté seul et vu depuis le côté intrados ;
[Fig. 5] est une vue du circuit de refroidissement médian de l'aube selon l'invention représenté seul et vu depuis le côté intrados ;
[Fig. 6] est une vue du circuit de refroidissement central de l'aube selon l'invention représenté seul et vu depuis le côté intrados ;
[Fig. 7] est une vue du circuit de refroidissement aval de l'aube selon l'invention représenté seul et vu depuis le côté intrados ;
[Fig. 8] est une vue d'ensemble des quatre circuits de refroidissement tels qu'agencés dans l'aube selon l'invention et vus depuis le côté intrados ;
[Fig. 9] est une vue d'ensemble montrant le circuit médian et le circuit central de refroidissement tels qu'agencés dans l'aube selon l'invention et vus depuis le côté intrados ;
[Fig. 10] est une vue d'ensemble montrant le circuit médian et le circuit central de refroidissement tels qu'agencés dans l'aube selon l'invention et vus depuis le côté extrados ;
[Fig. 11] montre la cavité sous baignoire ainsi que le deuxième coude et les premier et troisième conduits vus selon la direction d'envergure à distance de l'axe longitudinal ;
[Fig. 12] est montre le circuit médian seul tel que vu depuis l'axe longitudinal.

### EXPOSÉ DÉTAILLÉ DE MODES DE RÉALISATION PARTICULIERS

L'idée à la base de l'invention est de concevoir une aube dans laquelle le débit d'air nécessaire au refroidissement de sa partie médiane est réduit pour favoriser un meilleur refroidissement de ses parties critiques, comme en particulier la paroi d'intrados dans la région du sommet proche du bord de fuite.

### Agencement général de l'aube

L'aube selon l'invention, repérée par 11 sur la figure 2, comprend un pied P par lequel elle est fixée à une alvéole d'un disque de rotor appelé disque de turbine, et une pale 12 portée par ce pied P, avec une plateforme 13 raccordant le pied P à la pale 12. Cette aube 11 qui est creuse comporte quatre circuits internes dans lesquels circule de l'air de refroidissement admis par quatre embouchures situées à une face radialement inférieure 14 du pied P.

La pale 12 a une forme vrillée autour d'un axe dit d'envergure EV sensiblement perpendiculaire à un axe AX de rotation du rotor portant l'aube, cet axe de rotation étant un axe longitudinal du moteur. Elle comprend un bord d'attaque 16 sensiblement parallèle à la direction d'envergure EV et situé à l'amont AM ou avant de l'aube, par rapport à la direction générale de circulation des gaz dans la turbomachine. Elle comporte un bord de fuite 17 sensiblement parallèle au bord d'attaque 16 et espacé de celui-ci le long de l'axe AX pour être à l'aval AV ou arrière de l'aube. Elle comprend encore un sommet S sensiblement parallèle à la base 18 et espacé de celle-ci selon la direction d'envergure EV.

Les deux parois principales de cette aube sont sa paroi d'intrados 19, visible dans la figure 2, et sa paroi d'extrados 21, qui sont espacées l'une de l'autre tout en étant réunies au niveau du bord d'attaque 16, au niveau du bord de fuite 17, et dans la région du sommet S. La paroi d'intrados comporte des trous de refroidissement 22 qui la traversent et sont alimentés par un circuit de refroidissement interne pour former un film à la face externe de l'intrados 19 afin de la protéger thermiquement dans la région située en amont du bord de fuite 17.

Le bord d'attaque 16 est bombé et comporte des trous de refroidissement 23 traversant sa paroi, et le bord de fuite 17 qui est effilé comporte une série de fentes de refroidissement. Ces fentes 24 sont de faibles longueurs et s'étendent parallèlement à la direction d'envergure EV, en étant espacées et dans le prolongement les unes des autres, et situées à faible distance du bord de fuite proprement dit. Chaque fente 24 traverse la paroi d'intrados pour souffler de l'air sur la face externe de cette paroi d'intrados vers le bord de fuite qui est pourvu de nervures externes canalisant cet air parallèlement à l'axe AX.

Comme visible sur la figure 3, le sommet S comporte une paroi de sommet 25 orientée perpendiculairement à la direction d'envergure EV, qui raccorde les parois d'intrados et d'extrados. Cette paroi de sommet 25 est située en retrait vers l'axe AX par rapport aux bords libres des parois d'intrados et d'extrados, pour former avec ceux-ci une portion creuse, dite en baignoire et repérée par B, qui est ouverte en direction opposée à l'axe AX.

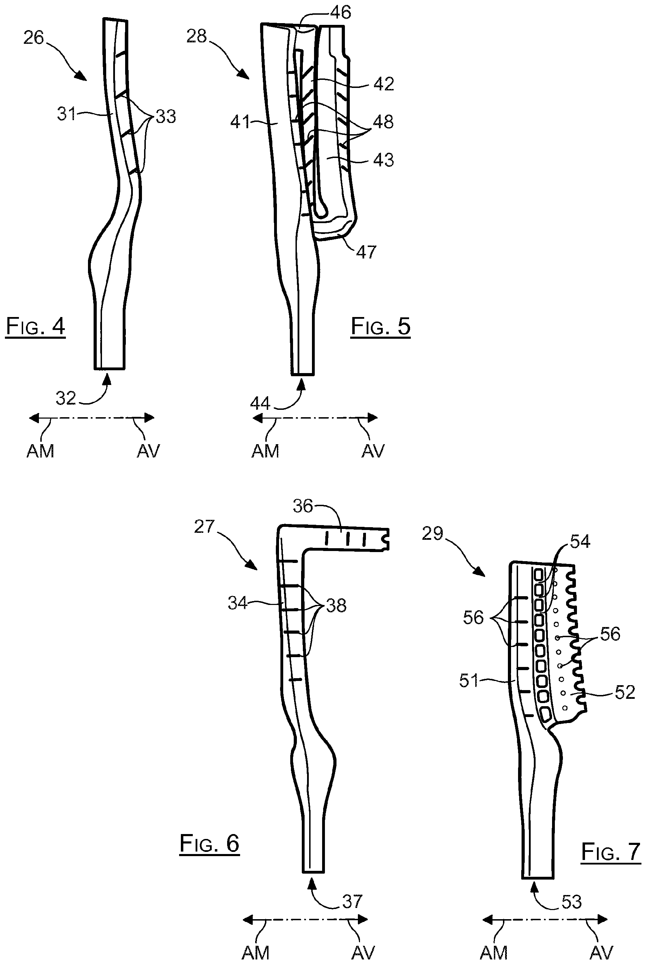

Cette aube est une pièce monobloc issue de fonderie d'un matériau métallique, qui est obtenue en utilisant un ensemble de noyaux pour délimiter ses conduits internes de refroidissement, ces noyaux étant retirés après coulée et refroidissement par exemple avec un processus d'attaque chimique. Les figures 4 à 12 montrent des régions internes de l'aube qui y sont représentées par les formes des noyaux permettant de fabriquer cette aube. Les formes de ces figures 4 à 12 sont en relief, mais elles constituent des représentations des formes creuses de l'aube.

L'aube 11 selon l'invention comporte quatre circuits internes de refroidissement : un circuit amont 26 ; un circuit central 27 ; un circuit médian 28 s'étendant de part et d'autre du circuit central ; et un circuit aval 29.

La fabrication de cette aube par fonderie est assurée en utilisant des noyaux en céramique comprenant quatre éléments de noyaux pouvant être rigidement solidarisés entre eux, chaque élément de noyau délimitant l'un des circuits 26, 27, 28 et 29.

### Circuit amont

Comme visible sur la figure 4, le circuit amont 26 comporte un conduit amont 31 radial, c'est-à-dire s'étendant parallèlement à la direction d'envergure EV. Ce conduit s'étend depuis son embouchure 32 située au niveau du pied P de la pale, jusqu'à une région du sommet S située sous la baignoire : il est terminé par la paroi de sommet délimitant le fond de la baignoire de l'aube.

L'air collecté dans l'embouchure 32 chemine dans le conduit 31 pour alimenter les trous de refroidissement 23 permettant d'assurer un refroidissement efficace de la portion de paroi constituant le bord d'attaque 16 de l'aube.

Complémentairement, le conduit amont 31 comporte des perturbateurs de flux 33, c'est-à-dire des éléments formant relief sur sa face interne, qui génèrent des turbulences dans l'écoulement d'air pour accroître les échanges thermiques entre l'air et les parois de l'aube qui délimitent ce conduit 31.

### Circuit central

Le circuit central 27 qui apparaît sur la figure 6 comprend un conduit central 34 radial prolongé par une cavité sous baignoire 36 axiale, c'est-à-dire orientée parallèlement à l'axe AX, ce conduit central 34 étant dédié à l'alimentation en air de cette cavité sous baignoire 36 dédiée au refroidissement de la paroi d'intrados dans la région du sommet S proche du bord de fuite. Le conduit central 34 s'étend depuis le pied P de l'aube où il comporte une embouchure 37 par laquelle il collecte l'air de refroidissement, et il est terminé par la paroi de sommet 25.

La cavité sous baignoire 36 s'étend longitudinalement, depuis une région centrale du sommet S, jusqu'au bord de fuite 17, et l'extrémité amont de cette cavité 36 est raccordée à l'extrémité radiale du conduit central 34 pour être alimentée en air par celui-ci.

Cette cavité sous baignoire 36 est délimitée latéralement d'une part par la paroi d'intrados 19 sur la longueur de cette cavité, et d'autre part par la paroi d'extrados au voisinage du bord de fuite 17 et en partie avant par une paroi interne de l'aube séparant le circuit médian du circuit central. Cette cavité sous baignoire 36 est délimitée selon l'axe d'envergure EV, par la paroi de sommet 25, et par un fond parallèle à cette paroi de sommet et espacé de celle-ci.

Le conduit central 34 est quant à lui délimité latéralement par la paroi d'intrados 19, et par la paroi séparant le circuit central 27 du circuit médian 28. L'air circulant dans ce conduit central 34 est ainsi en contact avec la paroi d'intrados 19, mais pas avec la paroi d'extrados 21.

Comme visible sur la figure 6, le circuit central 27 comporte des perturbateurs de flux 38 au niveau de son conduit central 34 et au niveau de la cavité sous baignoire 36 qui génèrent des turbulences afin d'accroître les échanges thermiques entre l'air et l'aube à leur niveau.

La cavité sous baignoire 36 s'étend ainsi principalement en sommet d'aube le long de l'intrados dans sa région proche du bord de fuite 17 afin d'assurer un refroidissement maximal par échange thermique dans cette région qui est soumise à une température de gaz élevée et est critique vis-à-vis de l'oxydation et de l'écaillage. Cette cavité 36 permet notamment d'alimenter en air très frais une ou plusieurs des fentes 24 de refroidissement du bord de fuite côté intrados qui sont les plus proches du sommet S, tout en ventilant efficacement par sa face interne la paroi d'intrados 19 proche du sommet S et du bord de fuite 17.

### Circuit médian de type serpentin

Le circuit médian 28 qui est visible sur la figure 5 comporte trois conduits 41, 42 et 43 radiaux communiquant les uns avec les autres selon un agencement en serpentin, encore appelé trombone, pour maximiser le trajet de l'air afin de faire travailler au maximum l'air issu de ce conduit. Le premier et le troisième conduit 41 et 43 sont situés respectivement en amont et en aval du conduit central 34 du circuit 27, alors que le deuxième conduit 42 est au même niveau que le conduit central 34 le long de l'axe AX en étant interposé entre ce conduit central 34 et la paroi d'extrados.

Les conduits 41, 42, 43 constituant le circuit médian 28 sont ainsi situés autour du conduit central 34, pour limiter l'échauffement de l'air acheminé par ce conduit central 34 vers la cavité sous baignoire 36 dédiée au refroidissement de la paroi d'intrados proche du sommet et du bord de fuite.

En outre, les conduits 41, 42, 43 de ce circuit médian 28 forment un serpentin et comportent chacun des perturbateurs de flux 48 de manière à favoriser l'échange thermique entre l'air qui les parcourt et les parois d'intrados et d'extrados.

### Premier conduit :

Le premier conduit 41 est ainsi situé longitudinalement entre le conduit amont 31 du circuit amont 26 et le conduit central 34 du circuit central 27 en les longeant tous les deux. Ce premier conduit 41, collecte de l'air au niveau du pied P par son embouchure 44 et il est terminé au niveau de la paroi de sommet en étant raccordé au deuxième conduit 42 par un premier coude 46. Ce premier conduit 41 s'étend latéralement depuis la paroi d'extrados 21 jusqu'à la paroi d'intrados 19, de sorte que l'air qui y chemine est en contact direct avec les parois d'intrados et d'extrados.

Ce premier conduit 41 est dépourvu de perçages traversant la paroi d'intrados 19 et de perçages traversant la paroi d'extrados 21 : il ne génère pas de film de refroidissement en face externe de l'aube. Ceci permet de favoriser un débit important dans ce premier conduit. Comme l'air circule dans ce premier conduit depuis le pied P vers le sommet S, il est plaqué contre la paroi d'intrados par effet Coriolis, mais l'étendue de la surface de contact avec la paroi d'intrados est réduite : cette combinaison permettant d'augmenter l'échange thermique avec la paroi d'intrados pour la refroidir de manière maximale.

### Deuxième conduit :

Le deuxième conduit 42 du circuit médian 28 longe le premier conduit 41 et le conduit central 34 du circuit central 27, en s'étendant latéralement entre la paroi d'extrados 21 et la paroi interne qui le sépare du conduit central 34, ce conduit central s'étendant quant à lui latéralement depuis cette paroi interne jusqu'à la paroi d'intrados 19. Ce deuxième conduit 42 présente ainsi une épaisseur selon la direction latérale qui est de l'ordre de la moitié de celle du premier conduit 41, et l'air qui y circule est en contact avec la paroi d'extrados 21 mais n'est pas en contact avec la paroi d'intrados 19.

Ce deuxième conduit 42 est lui aussi dépourvu de trous traversant la paroi d'extrados 21 : il ne contribue pas à un refroidissement par film externe, afin de favoriser un débit important également dans ce deuxième conduit 42. Comme l'air circule dans ce deuxième conduit 42 depuis le sommet S vers le pied P, il est plaqué par effet Coriolis contre la paroi d'extrados 21 qui est soumise à une température de gaz plus faible que la paroi d'intrados, de sorte que l'échauffement de l'air dans ce deuxième conduit 42 est relativement faible.

### Paroi interne :

La paroi interne de l'aube, non matérialisée sur les figures, s'étend entre le deuxième conduit 42 du circuit médian 28, et le conduit central 34 du circuit central 27, est une paroi centrale incurvée s'étendant d'une part depuis la base 18 jusqu'à la région du sommet S, et d'autre part de l'intrados 19 à l'extrados 21. En fonctionnement, cette paroi interne présente une température relativement faible du fait qu'elle n'est pas en contact avec le fluide dans lequel baigne l'aube. Par ailleurs, cette paroi interne reprend une part importante des efforts centrifuges subis par l'aube en service, ce qui limite l'endommagement de cette aube par fluage.

### Troisième conduit :

Le deuxième conduit 42 est raccordé dans la région de la base 18 de l'aube au troisième conduit 43, par un deuxième coude 47 situé latéralement entre la paroi d'extrados et la paroi interne.

Le troisième conduit 43 est espacé du deuxième conduit 42 le long de l'axe AX, et il le longe en s'étendant depuis la base 18 jusqu'à la région sous baignoire, parallèlement au conduit central 34 qu'il longe également. Sur l'essentiel de sa longueur, ce troisième conduit 43 s'étend latéralement de la paroi d'intrados 19 à la paroi d'extrados 21. Mais au niveau de son extrémité terminale, la section de ce troisième conduit 43 est réduite pour qu'il s'étende latéralement de la cavité sous baignoire 36 à la paroi d'extrados 21, et il est terminé par la paroi de sommet 25.

L'air circulant dans ce troisième conduit 43 est ainsi en contact direct avec les parois d'intrados et d'extrados sur l'essentiel de sa longueur, mais il est en contact uniquement avec l'extrados dans la portion d'extrémité de ce conduit du fait que celle-ci s'étend depuis la cavité sous baignoire 36 jusqu'à la paroi d'extrados 21.

L'embouchure 44 constitue l'unique voie d'alimentation en air de tout le circuit central, cet air traversant successivement les conduits 41, 42 et 43. Lorsqu'il parcourt le premier et le deuxième conduit 41 et 42, cet air conserve un débit important du fait de l'absence de perçages dans ces deux conduits, et il y est faiblement réchauffé. Lorsque l'air atteint le troisième conduit 43 il présente ainsi un débit élevé et une température faible permettant de refroidir efficacement cette partie. Le refroidissement de cette partie est notamment assuré au moyen des trous de refroidissement 22 traversant la paroi d'intrados 19 pour former un film d'air protégeant thermiquement la face externe de la paroi d'intrados 19 en amont du bord de fuite 17.

D'une manière générale, grâce à la combinaison du circuit central 27 et du circuit médian 28 selon l'invention, le débit d'air pour refroidir la zone en milieu de pale est inférieur au débit nécessaire avec un circuit de refroidissement classique.

### Agencement du circuit médian par rapport à la cavité sous baignoire

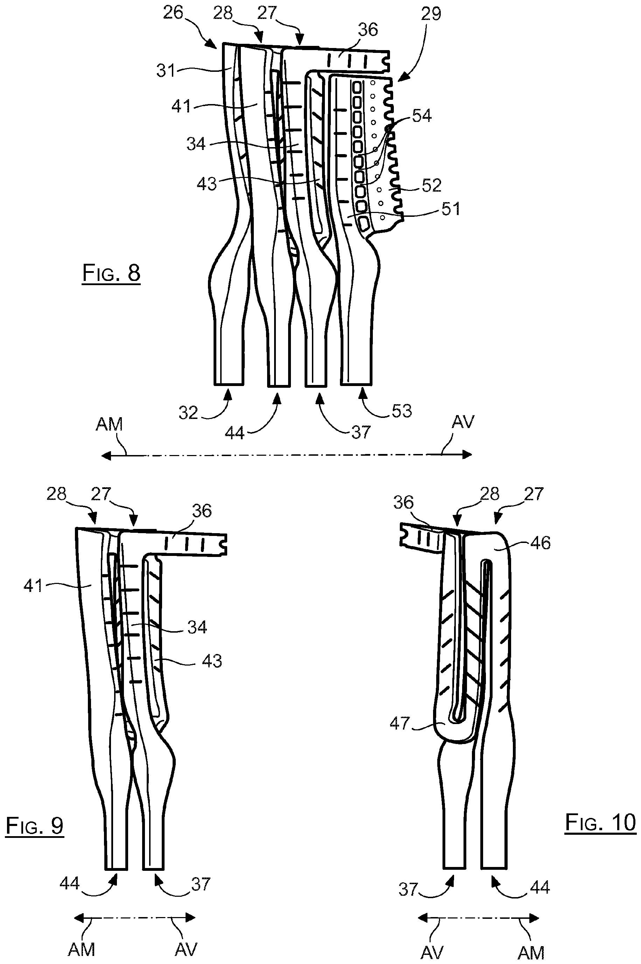

Comme visible plus clairement sur les figures 9 à 12, la cavité sous baignoire 36 s'étend du côté intrados, par rapport au sommet du troisième conduit 43 et au premier coude 46 qui longent l'un et l'autre l'extrados. Cette cavité sous baignoire 36 est ainsi dédiée au refroidissement de la paroi d'intrados 19 en sommet d'aube : le faible débit d'air relativement réchauffé arrivant au sommet du troisième conduit 43 n'est pas utilisé pour refroidir le sommet d'aube côté intrados proche du bord de fuite.

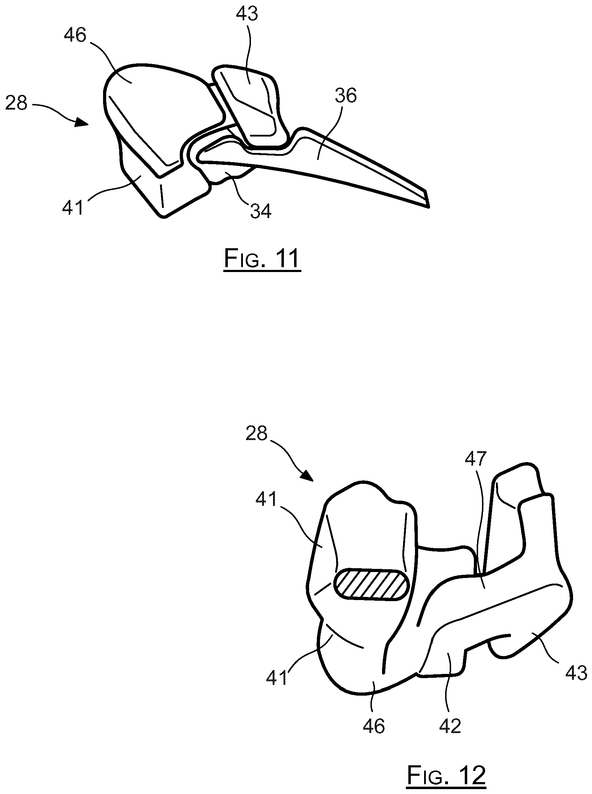

Dans ce cadre, et comme visible plus clairement sur les figures 11 et 12, la section du troisième conduit 43 est rétrécie au niveau de son sommet, de façon à libérer de l'espace pour la cavité sous baignoire 36.

### Circuit aval

Comme visible sur la figure 7, le circuit aval 29 comporte un conduit aval 51 alimentant une rampe aval 52 qui longe ce conduit aval 51 et qui alimente à son tour les fentes de refroidissement 24.

Plus particulièrement, la rampe aval 52 est à une certaine distance du conduit 51 le long de l'axe AX, et elle est reliée à celui-ci par une série de canaux 54 axiaux, c'est-à-dire parallèlement à l'axe AX. Ces canaux 54 qui s'étendent chacun parallèlement à l'axe AX sont régulièrement espacés les uns des autres le long de la direction d'envergure EV, et assurent une alimentation en air homogène de la rampe aval 52 sur toute sa hauteur, chaque canal ayant une section de passage calibrée, c'est-à-dire prédéterminée.

Le conduit 51 et la rampe 52 s'étendent parallèlement à la direction EV depuis une embouchure 53 située au niveau du pied P et par laquelle est collecté l'air de refroidissement, jusqu'à la cavité sous baignoire 36.

Ce conduit aval 51 ainsi que la rampe 52 comportent avantageusement des perturbateurs de flux 56 pour générer des turbulences et favoriser ainsi l'échange thermique avec la paroi d'intrados.

### Avantages

D'une manière générale, l'aube selon l'invention permet diminuer le débit d'air nécessaire à son refroidissement, en réduisant significativement le débit nécessaire au refroidissement de sa portion médiane de l'aube s'étendant sensiblement à mi-distance entre son bord d'attaque et son bord de fuite, et en préservant un air frais pour refroidir l'extrados proche du sommet et du bord de fuite.

Grâce à l'alimentation de la cavité sous baignoire par un conduit central situé entre les conduits du circuit de type serpentin, l'air acheminé vers la cavité sous baignoire se réchauffe peu, ce qui permet de refroidir efficacement la paroi d'intrados proche du sommet et du bord de fuite.

Le fait que le premier et le deuxième conduit du circuit de type serpentin soient dépourvus de trous vers l'extrados et vers l'intrados permet de préserver un débit important dans ce circuit de type serpentin pour refroidir efficacement les faces externes de la partie aval de l'aube grâce au troisième conduit de ce circuit de type serpentin.

Avec cet agencement, le circuit amont comporte un unique conduit dédié au refroidissement du bord d'attaque qui est de ce fait lui aussi refroidi de façon maximale.

## Revendications

1. Aube de turbine d'une turbomachine telle qu'un turboréacteur, destinée à être montée autour d'un axe de rotation (AX) sur un disque de rotor tournant autour d'un axe de rotation (AX), comprenant un pied (P) pour son montage dans une alvéole du disque, et une pale (12) creuse s'étendant à partir du pied (P) selon une direction radiale d'envergure (EV) en se terminant par un sommet (S) formant une baignoire (B), la pale (12) comprenant une paroi d'intrados (19) et une paroi d'extrados (21), ainsi qu'un bord d'attaque (16), un bord de fuite (17) et une paroi de sommet (25) délimitant un fond de la baignoire (B), et par lesquels la paroi d'intrados (19) est reliée à la paroi d'extrados (21), cette pale (12) comprenant également :
- un circuit médian (28) de type en trombone, incluant un premier conduit radial (41) collectant de l'air au niveau du pied (P) et qui est raccordé par un premier coude (46) à un deuxième conduit radial (42) qui est raccordé par un deuxième coude (47) à un troisième conduit radial (43) ;
- une cavité sous baignoire (36) située du côté de la paroi d'intrados (19) et de la paroi de sommet (25) et qui s'étend depuis une région centrale du sommet (S) jusqu'au bord de fuite (17) ;
- un conduit radial central (34) situé du côté de la paroi d'intrados (19) en étant délimité latéralement par cette paroi d'intrados (19), et qui collecte de l'air au niveau du pied (P) et s'étend entre au moins deux des trois conduits (41, 42, 43) du circuit médian (28) et alimente directement la cavité sous baignoire (36).

2. Aube selon la revendication 1, dans laquelle une extrémité du troisième conduit (43) et au moins une partie du premier coude (46) sont situés entre la cavité sous baignoire (36) et la paroi d'extrados.

3. Aube selon la revendication 1, dans laquelle le conduit central (34) et la cavité sous baignoire (36) forment un conduit en L situé du côté de la paroi d'intrados (19).

4. Aube selon l'une des revendications 1 à 3, dans laquelle le conduit central (34) s'étend entre au moins deux conduits (41, 43) du circuit médian (28) qui s'étendent l'un et l'autre sur la majorité de leurs longueurs respectives depuis la paroi d'extrados (21) jusqu'à la paroi d'intrados (19).

5. Aube selon la revendication 4, dans laquelle le premier conduit radial (41) et le troisième conduit radial (43) s'étendent l'un et l'autre sur la majorité de leurs longueurs depuis la paroi d'intrados (19) jusqu'à la paroi d'extrados (21), et dans lequel le conduit central (34) s'étend d'une part entre le premier conduit (41) et le troisième conduit (43), et d'autre part entre le deuxième conduit (42) et la paroi d'intrados (19).

6. Aube selon l'une des revendications précédentes, dans laquelle la paroi d'intrados (19) comporte des trous de refroidissement (22) qui la traversent et débouchent dans le troisième conduit (43) pour former un film de refroidissement de la paroi d'intrados (19) en amont du bord de fuite (17).

7. Aube selon l'une des revendications précédentes, dans laquelle la paroi d'intrados est dépourvue de trous débouchant dans le premier conduit (41) ou dans le deuxième conduit (42).

8. Aube selon l'une des revendications précédentes, comportant des fentes de refroidissement (24) traversant la paroi d'intrados (19) le long du bord de fuite (17) pour la refroidir, et dans laquelle au moins une de ces fentes (24) est située du côté du sommet (S) et est alimentée en air de refroidissement par la cavité sous baignoire (36).

9. Aube selon la revendication 8, comprenant un circuit aval (29) additionnel comportant un conduit aval radial (51) collectant de l'air au niveau du pied (P) pour alimenter plusieurs fentes de refroidissement (24) du bord de fuite (17).

10. Aube selon la revendication 9, dans laquelle le conduit aval (51) alimente les fentes (24) par l'intermédiaire d'une rampe aval (52) avec laquelle il communique par des canaux axiaux (54).

11. Aube selon l'une de revendications précédentes, comprenant au moins un conduit amont radial (31) dédié au refroidissement du bord d'attaque (16), ce conduit amont radial (31) collectant de l'air de refroidissement au niveau du pied (P) pour refroidir le bord d'attaque (16) en évacuant cet air par des trous (22) traversant la paroi de la pale au niveau du bord d'attaque (16).

12. Turbine de turbomachine comprenant une aube selon l'une quelconque des revendications 1 à 9.

13. Turbomachine comprenant une turbine selon la revendication précédente.

14. Noyau céramique pour la fabrication d'une aube de turbine d'une turbomachine telle qu'un turboréacteur, destinée à être montée autour d'un axe de rotation (AX) sur un disque de rotor tournant autour d'un axe de rotation (AX), comprenant un pied (P) pour son montage dans une alvéole du disque, et une pale (12) creuse s'étendant à partir du pied (P) selon une direction radiale d'envergure (EV) en se terminant par un sommet (S) formant une baignoire (B), la pale (12) comprenant une paroi d'intrados (19) et une paroi d'extrados (21), ainsi qu'un bord d'attaque (16), un bord de fuite (17) et une paroi de sommet (25) délimitant un fond de la baignoire (B), et par lesquels la paroi d'intrados (19) est reliée à la paroi d'extrados (21), ce noyau comprenant :
- un élément de noyau pour former un circuit médian (28) de type en trombone, incluant un premier conduit radial (41) collectant de l'air au niveau du pied (P) et qui est raccordé par un premier coude (46) à un deuxième conduit radial (42) qui est raccordé par un deuxième coude (47) à un troisième conduit radial (43) ;
- un autre élément de noyau pour former une cavité sous baignoire (36) située du côté de la paroi d'intrados (19) et de la paroi de sommet (25) et qui s'étend depuis une région centrale du sommet (S) jusqu'au bord de fuite (17), ainsi qu'un conduit radial central (34) situé du côté de la paroi d'intrados (19) en étant délimité latéralement par cette paroi d'intrados (19) et qui collecte de l'air au niveau du pied (P) et s'étend entre au moins deux des trois conduits (41, 42, 43) du circuit médian (28) et alimente directement la cavité sous baignoire (36).

## Patentansprüche

1. Turbinenschaufel einer Turbomaschine, wie eines Turbotriebwerks, die dazu bestimmt ist, um eine Drehachse (AX) auf einer Rotorscheibe montiert zu werden, die sich um eine Drehachse (AX) dreht, umfassend einen Fuß (P) für deren Montage in einer Zelle der Scheibe, und ein hohles Blatt (12), das sich aus dem Fuß (P) in einer radialen Spannweitenrichtung (EV) erstreckt, und durch einen Scheitel (S) abgeschlossen wird, der eine Wanne (B) bildet, wobei das Blatt (12) eine Druckseitenwand (19) und eine Saugseitenwand (21), sowie eine Vorderkante (16), eine Hinterkante (17) und eine Scheitelwand (25) umfasst, die einen Boden der Wanne (B) begrenzt, und durch die die Druckseitenwand (19) mit der Saugseitenwand (21) verbunden ist, wobei dieses Blatt (12) ebenfalls umfasst:
- einen mittleren Kreis (28) in der Art einer Büroklammer, der eine erste radiale Leitung (41) beinhaltet, die Luft auf Höhe des Fußes (P) auffängt, und die durch einen ersten Winkel (46) an eine zweite radiale Leitung (42) angeschlossen ist, die durch einen zweiten Winkel (47) an eine dritte radiale Leitung (43) angeschlossen ist;
- einen Hohlraum unter der Wanne (36), der sich auf Seiten der Druckseitenwand (19) und der Scheitelwand (25) befindet und der sich aus einem zentralen Bereich des Scheitels (S) bis zur Hinterkante (17) erstreckt;
- eine zentrale radiale Leitung (34), die sich auf Seiten der Druckseitenwand (19) befindet, und seitlich durch diese Druckseitenwand (19) begrenzt wird, und die Luft auf Höhe des Fußes (P) auffängt, und sich zwischen mindestens zwei der drei Leitungen (41, 42, 43) des mittleren Kreises (28) erstreckt, und den Hohlraum unter der Wanne (36) direkt versorgt.

2. Schaufel nach Anspruch 1, wobei sich ein Ende der dritten Leitung (43) und mindestens ein Teil des ersten Winkels (46) zwischen dem Hohlraum unter der Wanne (36) und der Saugseitenwand befinden.

3. Schaufel nach Anspruch 1, wobei die zentrale Leitung (34) und der Hohlraum unter der Wanne (36) eine L-Leitung bilden, die sich auf Seiten der Druckseitenwand (19) befindet.

4. Schaufel nach einem der Ansprüche 1 bis 3, wobei sich die zentrale Leitung (34) zwischen mindestens zwei Leitungen (41, 43) des mittleren Kreises (28) erstreckt, die sich, die eine ebenso wie die andere, über den Großteil ihrer jeweiligen Längen von der Saugseitenwand (21) bis zur Druckseitenwand (19) erstrecken.

5. Schaufel nach Anspruch 4, wobei sich die erste radiale Leitung (41) und die dritte radiale Leitung (43), die eine ebenso wie die andere, über den Großteil ihrer Längen von der Druckseitenwand (19) bis zur Saugseitenwand (21) erstrecken, und wobei sich die zentrale Leitung (34) einerseits zwischen der ersten Leitung (41) und der dritten Leitung (43), und andererseits zwischen der zweiten Leitung (42) und der Druckseitenwand (19) erstreckt.

6. Schaufel nach einem der vorstehenden Ansprüche, wobei die Druckseitenwand (19) Kühllöcher (22) beinhaltet, die sie durchqueren, und in die dritte Leitung (43) münden, um einen Kühlfilm der Druckseitenwand (19) stromaufwärts der Hinterkante (17) gelegen zu bilden.

7. Schaufel nach einem der vorstehenden Ansprüche, wobei die Druckseitenwand mit keinen Löchern versehen ist, die in die erste Leitung (41) oder in die zweite Leitung (42) münden.

8. Schaufel nach einem der vorstehenden Ansprüche, welche Kühlschlitze (24) beinhaltet, die die Druckseitenwand (19) entlang der Hinterkante (17) durchqueren, um sie zu kühlen, und wobei sich mindestens einer dieser Schlitze (24) auf Seiten des Scheitels (S) befindet und von dem Hohlraum unter der Wanne (36) mit Kühlluft versorgt wird.

9. Schaufel nach Anspruch 8, welche einen zusätzlichen, stromabwärts gelegenen Kreis (29) beinhaltet, der eine radiale stromabwärts gelegene Leitung (51) beinhaltet, die Luft im Bereich des Fußes (P) auffängt, um mehrere Kühlschlitze (24) der Hinterkante (17) zu versorgen.

10. Schaufel nach Anspruch 9, wobei die stromabwärts gelegene Leitung (51) die Schlitze (24) anhand einer stromabwärts gelegenen Rampe (52) versorgt, mit der sie über axiale Kanäle (54) kommuniziert.

11. Schaufel nach einem der vorstehenden Ansprüche, welche mindestens eine radiale stromaufwärts gelegene Leitung (31) umfasst, die der Kühlung der Vorderkante (16) gewidmet ist, wobei diese radiale stromaufwärts gelegene Leitung (31) Kühlluft auf Höhe des Fußes (P) auffängt, um die Vorderkante (16) zu kühlen, indem diese Luft durch Löcher (22) ausgebracht wird, die die Wand des Blattes im Bereich der Vorderkante (16) durchqueren.

12. Turbine einer Turbomaschine, welche eine Schaufel nach einem der Ansprüche 1 bis 9 umfasst.

13. Turbomaschine, welche eine Turbine nach dem vorstehenden Anspruch umfasst.

14. Keramikkern zur Herstellung einer Schaufel einer Turbine einer Turbomaschine, wie eines Turbotriebwerks, die dazu bestimmt ist, um eine Drehachse (AX) auf einer Rotorscheibe montiert zu werden, die sich um eine Drehachse (AX) dreht, umfassend einen Fuß (P) für deren Montage in einer Zelle der Scheibe, und ein hohles Blatt (12), das sich aus dem Fuß (P) in einer radialen Spannweitenrichtung (EV) erstreckt, und durch einen Scheitel (S) abgeschlossen wird, der eine Wanne (B) bildet, wobei das Blatt (12) eine Druckseitenwand (19) und eine Saugseitenwand (21), sowie eine Vorderkante (16), eine Hinterkante (17) und eine Scheitelwand (25) umfasst, die einen Boden der Wanne (B) begrenzt, und durch die die Druckseitenwand (19) mit der Saugseitenwand (21) verbunden ist, wobei dieser Kern umfasst:
- ein Kernelement zur Bildung eines mittleren Kreises (28) in der Art einer Büroklammer, der eine erste radiale Leitung (41) beinhaltet, die Luft auf Höhe des Fußes (P) auffängt, und die durch einen ersten Winkel (46) an eine zweite radiale Leitung (42) angeschlossen ist, die durch einen zweiten Winkel (47) an eine dritte radiale Leitung (43) angeschlossen ist;
- ein weiteres Kernelement zur Bildung eines Hohlraumes unter der Wanne (36), der sich auf Seiten der Druckseitenwand (19) und der Scheitelwand (25) befindet und der sich aus einem zentralen Bereich des Scheitels (S) bis zur Hinterkante (17) erstreckt, sowie einer zentralen radialen Leitung (34), die sich auf Seiten der Druckseitenwand (19) befindet, und seitlich durch diese Druckseitenwand (19) begrenzt wird, und die Luft auf Höhe des Fußes (P) auffängt, und sich zwischen mindestens zwei der drei Leitungen (41, 42, 43) des mittleren Kreises (28) erstreckt, und den Hohlraum unter der Wanne (36) direkt versorgt.

## Claims

1. A turbine vane of a turbomachine such as a turbojet engine, for being mounted about an axis of rotation (AX) on a rotor disc rotating about an axis of rotation (AX), comprising a root (P) for mounting thereof in a cell of the disc, and a hollow blade (12) extending from the root (P) in a radial spanwise direction (EV) and terminating in a top (S) forming a bathtub (B), the blade (12) comprising a lower surface wall (19) and an upper surface wall (21), as well as a leading edge (16), a trailing edge (17) and a top wall (25) delimiting a bottom of the bathtub (B), and by means of which the lower surface wall (19) is connected to the upper surface wall (21), this blade (12) also comprising :
- a paper clip-type median circuit (28), including a first radial duct (41) collecting air at the root (P) and which is connected through a first bend (46) to a second radial duct (42) which is connected through a second bend (47) to a third radial duct (43);
- an under-bathtub cavity (36) located on the side of the lower surface wall (19) and the top wall (25) and which extends from a central region of the top (S) to the trailing edge (17);
- a central radial duct (34) located on the side of the lower surface wall (19) and which collects air at the root (P) and extends between at least two of the three ducts (41, 42, 43) of the median circuit (28) and directly feeds the under-bathtub cavity (36).

2. The vane of claim 1, wherein one end of the third duct (43) and at least part of the first bend (46) are located between the under-bathtub cavity (36) and the upper surface wall.

3. The vane according to claim 1, wherein the central duct (34) and the under-bathtub cavity (36) form an L-shaped duct located on the side of the lower surface wall (19).

4. The vane according to one of claims 1 to 3, wherein the central duct (34) extends between at least two ducts (41, 43) of the median circuit (28) which both extend over most of their respective lengths from the upper surface wall (21) to the lower surface wall (19).

5. The vane according to claim 4, wherein the first radial duct (41) and the third radial duct (43) both extend over most of their lengths from the lower surface wall (19) to the upper surface wall (21), and wherein the central duct (34) extends on the one hand between the first duct (41) and the third duct (43), and on the other hand between the second duct (42) and the lower surface wall (19).

6. The vane according to one of the preceding claims, wherein the lower surface wall (19) comprises cooling holes (22) which pass therethrough and open into the third duct (43) to form a cooling film of the lower surface wall (19) upstream of the trailing edge (17).

7. The vane according to one of the preceding claims, wherein the lower surface wall is devoid of holes opening into the first duct (41) or into the second duct (42).

8. The vane according to one of the preceding claims, comprising cooling slots (24) passing through the lower surface wall (19) along the trailing edge (17) to cool it, and wherein at least one of these slots (24) is located on the side of the top (S) and is fed with cooling air by the under-bathtub cavity (36).

9. The vane according to claim 8, comprising an additional downstream circuit (29) having a radial downstream duct (51) collecting air at the root (P) to feed several cooling slots (24) of the trailing edge (17).

10. The vane according to claim 7, wherein the downstream duct (51) feeds the slots (24) via a downstream ramp (52) with which it communicates through axial channels (54).

11. The vane according to one of the preceding claims, comprising at least one radial upstream duct (31) dedicated to cooling the leading edge (16), this radial upstream duct (31) collecting cooling air at the root (P) to cool the leading edge (16) by discharging this air through holes (22) passing through the blade wall at the leading edge (16).

12. A turbine of a turbomachine comprising a vane according to any of claims 1 to 9,

13. A turbomachine comprising a turbine according to the preceding claim.

14. A ceramic core for manufacturing a turbine vane of a turbomachine such as a turbojet engine, for being mounted about an axis of rotation (AX) on a rotor disc rotating about an axis of rotation (AX), comprising a root (P) for mounting thereof in a cell of the disc, and a hollow blade (12) extending from the root (P) in a radial spanwise direction (EV) and terminating in a top (S) forming a bathtub (B), the blade (12) comprising a lower surface wall (19) and an upper surface wall (21), as well as a leading edge (16), a trailing edge (17) and a top wall (25) delimiting a bottom of the bathtub (B), and through which the lower surface wall (19) is connected to the upper surface wall (21), said core comprising :
- a core element to form a paper clip-type median circuit (28), including a first radial duct (41) collecting air at the root (P) and which is connected through a first bend (46) to a second radial duct (42) which is connected through a second bend (47) to a third radial duct (43)
- a further core element to form an under-bathtub cavity (36) located on the side of the lower surface wall (19) and the top wall (25) and which extends from a central region of the top (S) to the trailing edge (17), as well as a central radial duct (34) located on the side of the lower surface wall (19) and which collects air at the root (P) and extends between at least two of the three ducts (41, 42, 43) of the median circuit (28) and directly feeds the under-bathtub cavity (36).
